# NEW EUROPEAN PATENT SPECIFICATION

(11) **EP 2 159 116 B2**
(45) Date of publication and mention of the opposition decision: **09.02.2022**
(45) Mention of the grant of the patent: 21.03.2012
(21) Application number: 09009817.9
(22) Date of filing: 29.07.2009
(51) Int. Cl.: B60T 8/00, B60T 8/32, B60T 13/66, B60T 13/68, B60T 13/74, B60T 17/02

(54) **Trailer electronic braking system**
Elektronisches Anhängerbremssystem
Système de freinage électronique de remorque

(30) Priority: 29.07.2008 GB 0813822
(43) Date of publication of application: 03.03.2010
(73) Proprietor: KNORR-BREMSE Systeme für Nutzfahrzeuge GmbH, 80809 München (DE)
(72) Inventor: Mederer, Martin, 92318 Neumarkt (DE); Fry, Matthew, Wraxall BS48 1PP North Somersec (GB)
(74) Representative: JENSEN & SON

(56) References cited:
- EP-A- 0 478 952
- EP-A- 0 586 203
- EP-A- 1 902 917
- EP-A1- 0 478 952
- EP-A2- 0 586 203
- EP-A2- 1 902 917
- WO-A-97/43155
- WO-A1-01/72555
- WO-A1-97/43155
- WO-A2-2005/030545
- WO-A2-2005/030546
- WO-A2-2010/010319
- DE-A1- 3 344 301
- DE-A1- 10 310 235
- GB-A- 2 196 074
- GB-A- 2 270 355
- GB-A- 2 270 355
- GB-A- 2 284 458
- GB-A- 2 284 458
- US-A1- 2005 071 070
- US-A1- 2005 071 070
- Bosch, Kraftfahrtechnisches Taschenbuch , 26th edition, 2007,Vieweg Verlag, pages 903 to 909 & Bosch, Kraftfahrtechnisches Taschenbuch , 26th edition, 2007,Vieweg Verlag, pages 990 to 993
- Robert Bosch GmbH Druckluftanlagen für Nutzfahrzeuge 1 -Grundlagen, Systeme und Pläne , edition 98/99 (3rd edition, February 1998)

## Description

The invention relates to a trailer electronic braking system for motor vehicles having a plurality of trailers.

The transportation of heavy loads represents a significant problem for certain industries. Extremely large loads such as some mining equipment or turbines, for example, effectively have to be transported by road from the manufacturer to the place of use as alternative modes of transport such as rail or air are simply too constrained by the dimensions of the load to be transported. Such loads typically have to be transported using either specialist trailers or a plurality of modular trailers joined together both sequentially and parallel to one another.

Such specialist trailer systems are equipped with purely pneumatic braking systems as the relevant standard ISO11992 mandates a maximum length from the headboard of the trailer to the rear axle of 18m, which is considerably shorter than many heavy load trailers. The brake systems for these suffer from the problem that the pneumatic actuation system from the prime mover can take up to 1000 ms to reach the back of the vehicle in the event of a brake actuation. For this reason, the vehicles tend to be required to drive slowly to minimise the risk of any spin. One knock on effect of this is that such vehicles frequently cause lengthy traffic jams as they hold up the traffic.

An example of such a system is EP1902917, which disclose a further brake system for a trailer in which the brake signals are pneumatic, the only electrical signal that is transmitted is the stop light signal.

WO2005/030545 and WO2005/030546 disclose a brake system with distributed control. In these systems, a central control unit provides the control signals for a local control unit assigned to a respective wheel end on the vehicle. The local control units are adapted to provide a localised control on the wheel end in response to a signal input from a sensor in circumstances where only local control is required and no coordination from the central control unit is necessary.

WO01/72555 discloses a braking system having a central control unit and wheel mounted electronic control units that function as wheel slip sensors and transmit a signal indicative of slip over the existing power bus.

WO97/43155 discloses a simple trailer EBS system, in which an electrical signal is generated to operate a pressure control valve. The system disclosed is intended to work on a standard ISO trailer but would not be suitable for use in an extra long trailer.

The known brake systems suffer from the problem that the transmission of the braking signal from a prime mover or truck to an extra-long trailer takes significantly longer than on a standard truck and trailer.

The present invention therefore seeks to provide a braking system for a motor vehicle having a plurality of trailers that has a faster actuation of the brakes

According to the invention there is provided a braking system for a trailer, in accordance with the characteristics of Claim 1

Preferably, the trailer comprises first and second axles arranged co-axially to one another and third and fourth axles arranged co-axially to one another and behind the first and second axles with respect to the front of the vehicle, wherein each axle is associated with a respective electronic control unit adapted to control the braking force applied to that axle. Further preferred aspects can be found in the remaining sub-claims

As the prime mover provides a pneumatic signal to the trailer, the pressure transducer enables this pneumatic signal to be converted to an electrical signal which can then be processed by the electronic control unit. This in turn permits the electronic control unit to provide an electronic actuation signal for the brake actuators on each trailer unit rather than pneumatically, thereby enabling the brakes at the rear of the trailer to be actuated around 10 times more quickly than with a pneumatic signal. This in turn reduces the likelihood of the any loss of control of the trailer during operation and allows for a higher permitted speed.

An exemplary embodiment of the invention will now be described in greater detail with reference to the drawings in which:
Fig. 1 shows schematically a trailer for transporting heavy loads
Fig. 2 shows a schematic of the detail of a prior art braking system

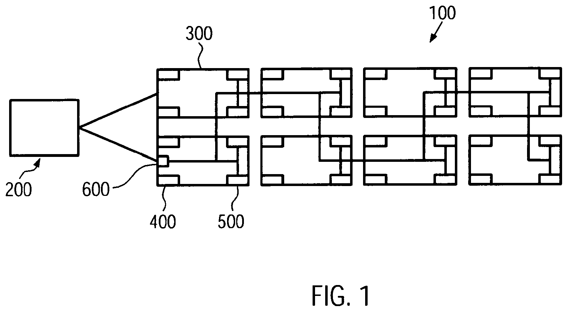

Figure 1 shows schematically a trailer 100 for transporting heavy loads, which is pulled by a prime mover or tractor 200. The trailer 100 has what is commonly termed a modular structure and comprises eight trailer units 300. The trailer units 300 each have front 400 and rear axles 500 and are arranged such that two units are arranged adjacent to one another at the front of the trailer 1 with three further pairs of trailer units to the rear of the trailer. The number of trailer units is purely exemplary and many other configurations including additional units are possible. Each trailer unit is joined to one trailer to its respective side and to the trailer unit in front and behind as appropriate.

The trailer is provided with an electronic braking system comprising a braking electronic control unit 600 and a trailer remote module ECU with a pressure transducer in the coupling head. The pressure transducer is adapted to read the pneumatic brake pressure signal from the prime mover and convert it to an electrical or digital signal which is transmitted by the remote module to the electronic control unit 600.

Each axle on the trailer units 300 is provided with an electrically actuatable braking device capable of generating a braking force on an axle on the trailer, the pneumatic brake force into the brake cylinders on each axle being electrically controllable by the braking ECU 600 and the trailer remote module as is described in more detail below.

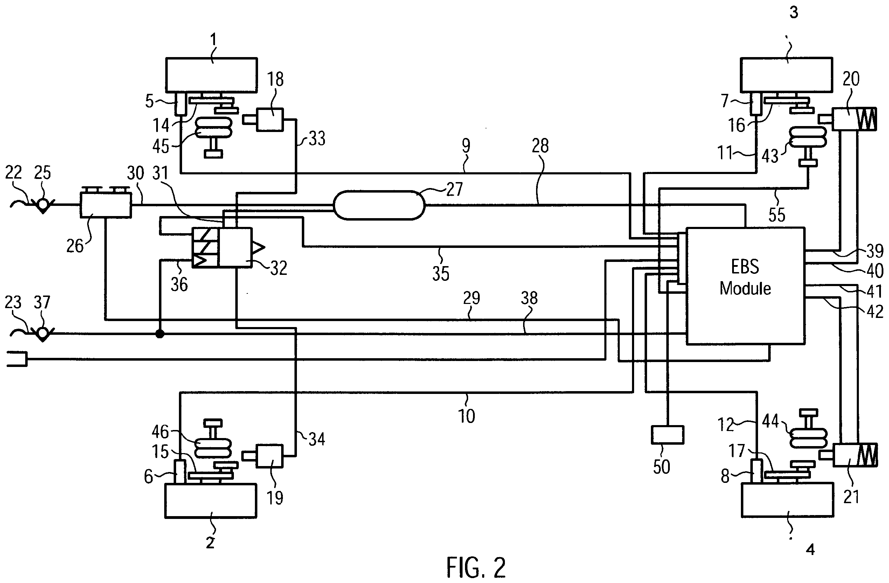

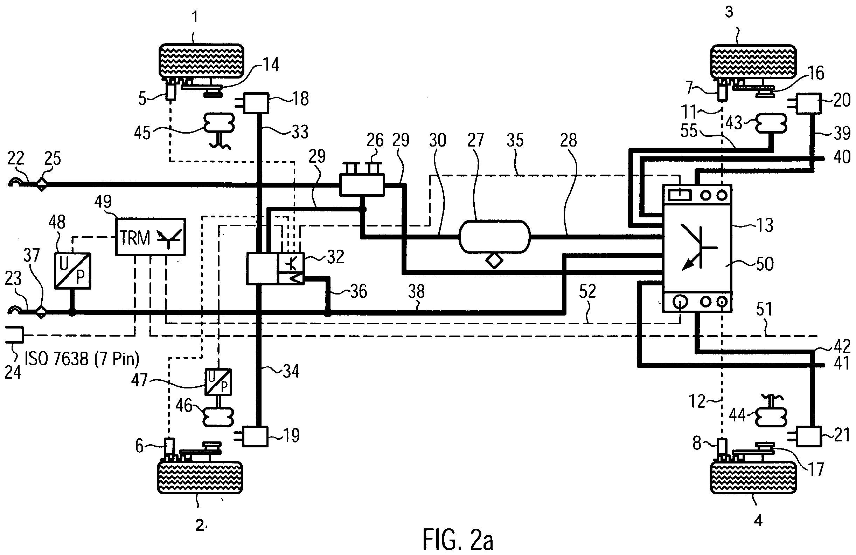

Figure 2 shows schematically elements of the braking system. The trailer unit has a steerable front axle with front wheels 1, 2 and a rear axle with rear wheels 3, 4. Rotational wheel speed sensors 5-8 are in each case assigned to the front wheels 1, 2 and the rear wheels 3, 4, and are connected by way of electric lines 9-12 with an electropneumatic brake pressure control module 13 (EBS module) which is primarily assigned to the rear axle brakes. One brake 14-17 is in each case assigned to the front wheels 1, 2 and the rear wheels 3, 4, which brake 14-17 can be applied by means of brake cylinders 18, 19 of the front axle or spring-loaded brake cylinders 20, 21 of the rear axle. The pressure control module is adapted to generate a braking force on the trailer and this can be either axle control or wheel end control, i.e. a braking force is generated on an axle or wheel end.

The braking system of the trailer vehicle can be connected by way of three connections, specifically a pneumatic supply line connection 22, a pneumatic control line connection 23 and an electric control connection 24, with the braking system of the prime mover 200 or a further trailer. This connection is commonly referred to as the coupling head.

The supply line connection 22 is connected by way of a line filter 25 and a parking valve 26 with an air brake reservoir 27. From the air brake reservoir 27, a pneumatic line 28 leads to a supply input of the pressure control module 13 and ABS valve 32. In addition, a pneumatic line 29 branches off the parking valve 26 to the pressure control module 13 and a pneumatic line 30 extends between the parking valve 26 and the air brake reservoir 27.

The ABS valve 32 is assigned jointly to both brake cylinders 18, 19 of the front axle and is connected with the brake cylinder 18 by way of a pneumatic line 33 and with the brake cylinder 19 by way of a pneumatic line 34. The ABS valve 32 has two electric control inputs which are connected by way of "one" electric line 35 shown here only schematically with the pressure control module 13.

Furthermore, the ABS valve 32 has a pneumatic control input 36 which is connected by way of a line filter 37 with the pneumatic control connection 23. The pneumatic control input 36 is also connected by way of a pneumatic control line 38 with a pneumatic control input of the pressure control module 13. The pressure control module 13 has an integrated pressure sensor (not shown) which measures the pressure in the pneumatic control line 38, that is, the control pressure present at the pneumatic control input 36 of the ABS valve, which control pressure is identical to the maximal pressure which can be controlled into the brake cylinders 18, 19.

The pressure control module 13 has pneumatic outputs 39 42 which are connected by way of assigned pneumatic lines with the spring brake cylinders 20 and 21. The control module 13 has further pneumatic outputs 40, 41 which are assigned to the brake cylinders of the further trailer element.

Furthermore, pneumatic axle load sensors or air bellows 43, 44 are provided at the rear axle and permit a determination of the axle load, particularly of the dynamic axle load during braking and starting. The axle load sensors 43, 44 are connected by way of electric lines with the pressure control module 13 which is shown here only as an example by means of the electric line 55. Correspondingly axle load sensors 45, 46 may be provided at the front axle. However, the axle load sensors 45,46 are not absolutely necessary. A pressure transducer 47 associated with the axle load sensor 46 provides an electrical input for the ABS valve 32.

An electronic control unit (-trailer remote module) 49 is provided, which is adapted to measure the pressure in the control line by way of a pressure transducer 48. The electronic control unit 49 is connected with the electrical control connection 24 from the prime mover 200. A further electrical connection is provided between the electronic control unit 49 and the pressure control module 13 and between the electronic control unit 49 and the second trailer (not shown) 51, so that signals from prime mover can be transmitted to the pressure control module 13 and/or signals from the pressure control module 13 can be transmitted to the second trailer. The electronic control unit 49 (trailer remote module) can therefore act as a relay for signals from either the prime mover to the pressure control module 13 and/or the pressure control module 13 to a further such pressure control module on the second trailer. The rearmost trailer or trailer section (for a trailer greater than 18m in length, for example) does not need its own electronic control unit (trailer remote module).

If there is no electrical connection to an EBS on the prime mover, the electronic control unit 49 generates the control messages that would otherwise have been produced by the prime mover EBS with the data obtained from pressure transducer 48.

To provide stability control a lateral acceleration sensor 50 is provided, which may also be integrated with a yaw sensor, and the output of the lateral acceleration sensor is fed to the pressure control module/ECU 13. Typically the lateral acceleration sensor 50 is integrated into the pressure control module/ECU 13. In the event that lateral acceleration on the trailer is detected, the pressure control module can provide for increased brake force at the front and/or rear axles. When the lateral acceleration sensor 50 detects lateral acceleration on the trailer in which it is installed, the sensor generates a signal setting the stability control to active.

With respect to the prior art embodiment described to Figure 2, the ABS valve 32 may be replaced with an electro-pneumatic valve where the electric control line 35 consists of a commutation means preferably CAN and an electric power source.

In use, when a brake demand is made by the driver of the prime mover, the pneumatic brake signal is passed from the prime mover to the trailer via the coupling head of the trailer, which provides a pneumatic connection between the prime mover and trailer. The pressure transducer in the coupling head then converts the pneumatic signal to an electronic signal and passes this to the electronic control unit 600, which can control the actuation of the trailer brakes. The electronic control unit 600 can either be a full electronic braking system control module or can be a so-called dumb EBS module such as the trailer remote module 49 described above, which functions as a signal router and amplifier, transmitting the electrical brake signal to the next EBS which can in turn actuate the brakes for which it is responsible. This permits the EBS to meet the ISO 11992 standard and to transmit the brake demand electrically along the trailer, which for a 36m trailer will take around 30ms compared to 1000ms for a pneumatic signal. The use of the EBS modules also permits the introduction of stability control on these trailers, which has not been possible heretofore. Where the further EBS modules are also equipped with respective pressure transducers, the EBS module will select the electrical demand signal from the predecessor EBS in preference to a local pressure signal.

Although the invention has been specifically described as relating to a modular trailer, it would also be suitable for use on very long trailers such as those used for transporting wind turbines or other large structures. It would also be possible to use two or more dumb EBS modules so that the brake system can be used on trailers longer than 36m. The invention is also applicable to the powerline standard used in North America as well as ISO 11992 compliant systems. In this specification the term trailer includes trailers comprising a plurality of trailer parts or units where the combined length of the trailer parts is greater than the ISO 11992 permitted maximum length (currently 18m).

## Claims

1. A braking system for a trailer, which trailer has a front and a rear end, the braking system comprising a pressure control module (13) capable of generating a braking force on a wheel end or an axle on the trailer,
an electronic control unit (49) adapted to actuate the pressure control module (13), which electronic control unit comprises a pressure transducer (48) adapted to receive a pressure signal from a prime mover and further adapted to convert the pressure signal to an electronic signal, wherein the electronic signal is processable by the electronic control unit (49), so that signals from the prime mover can be transmitted to the pressure control module (13) **characterised in that** electronic signals from the pressure control module (13) can be transmitted to a further trailer by the electronic control unit (49).

2. A braking system according to Claim 1, wherein the electronic control unit (49) is adapted to transmit the signal to a further electronic control unit, which further electronic control unit is adapted either to actuate a further braking device on said trailer and/or to transmit the signal to a further electronic control unit or braking device.

3. A braking system according to Claim 1 or Claim 2, wherein the system further comprises means adapted to relay an electronic signal to the or each braking device on the trailer.

4. A braking system for a trailer according to any one of Claims 1 to 3, wherein the trailer comprises first and second axles arranged co-axially with respect to one another and third and fourth axles arranged co-axially with respect to one another and behind the first and second axles with respect to the front of the vehicle, wherein each axle is associated with a respective electronic control unit adapted to control the braking force applied to that axle.

5. A braking system according to any one Claims 1 to 4. wherein the pressure transducer (48) is located in the coupling head.

6. A braking system according to any one of Claims 1 to 5, wherein the trailer comprises a first trailer or trailer part, the electronic control unit (49) being adapted to actuate the pressure control module (13) on said first trailer or trailer part, the further electronic control unit being adapted to control a further beaming device on a further trailer or trailer part.

7. A braking system according to any one of Claims 1 to 6, wherein the further electronic control unit selects a control signal from a predecessor electronic control unit in preference to a signal from a braking device.

8. A braking system according to any one of Claims 1 to 7, wherein the distance between the front and rear end of the trailer or vehicle is greater than 18m.

9. A braking system according to any one of the preceding Claims, wherein in the absence of an electrical connection to the pressure control module on the prime mover, the electronic control unit generates a control signal with the date obtained from the pressure transducer

## Patentansprüche

1. Bremsanlage für einen ein vorderes und ein hinteres Ende aufweisenden Anhänger, wobei die Bremsanlage aufweist: ein Druckregelmodul (13), das eine Bremskraft an einem Radende oder einer Achse des Anhängers erzeugen kann,
eine zur Betätigung des Druckregelmoduls (13) ausgelegte elektronische Steuereinheit (49), die einen Druckwandler (48) umfasst, der zum Empfang eines Drucksignals von einer Antriebsmaschine und weiter zum Umwandeln des Drucksignals in ein elektronisches Signal ausgelegt ist, wobei das elektronische Signal von der elektronischen Steuereinheit (49) verarbeitet werden kann, so dass Signale von der Antriebsmaschine an das Druckregelmodul (13) übertragen werden können, **dadurch gekennzeichnet, dass** die elektronischen Signale vom Druckregelmodul (13) von der elektronischen Steuereinheit (49) an einen weiteren Anhänger übertragen werden können.

2. Bremsanlage nach Anspruch 1, wobei die elektronische Steuereinheit (49) zur Übertragung des Signals an eine weiter elektronische Steuereinheit ausgelegt ist, die zur Betätigung einer weiteren Bremseinrichtung am besagten Anhänger und/oder zur Übertragung des Signals an eine weiter elektronische Steuereinheit oder Bremseinrichtung ausgelegt ist.

3. Bremsanlage nach Anspruch 1 oder Anspruch 2, wobei die Anlage weiter Mittel umfasst, die zur Übermittlung eines elektronischen Signals an die oder an jede Bremseinrichtung am Anhänger ausgelegt sind.

4. Bremsanlage für einen Anhänger nach einem der Ansprüche 1 bis 3, wobei der Anhänger erste und zweite Achsen, die koaxial zueinander ausgerichtet sind, und dritte und vierte Achsen, die koaxial zueinander ausgerichtet sind und bezüglich der Fahrzeugfront hinter den ersten und zweiten Achsen angeordnet sind, umfasst, wobei eine jede Achse mit einer jeweiligen elektronischen Steuereinheit verbunden ist, die zur Regelung der auf die betreffende Achse einwirkenden Bremskraft ausgelegt ist.

5. Bremsanlage nach einem der Ansprüche 1 bis 4, wobei der Druckwandler (48) im Kupplungskopf angeordnet ist.

6. Bremsanlage nach einem der Ansprüche 1 bis 5, wobei der Anhänger einen ersten Anhänger oder Anhängerteil umfasst, wobei die elektronische Steuereinheit (49) zur Betätigung des Druckregelmoduls (13) am besagten ersten Anhänger oder Anhängerteil ausgelegt ist, wobei die weitere elektronische Steuereinheit zum Steuern einer weiteren Bremseinrichtung an einem weiteren Anhänger oder Anhängerteil ausgerichtet ist.

7. Bremsanlage nach einem der Ansprüche 1 bis 6, wobei die weitere elektronische Steuereinheit ein Steuersignal von einer elektronischen Vorgänger-Steuereinheit anstelle eines Signals von einer Bremseinrichtung auswählt.

8. Bremsanlage nach einem der Ansprüche 1 bis 7, wobei der Abstand zwischen dem vorderen und dem hinteren Ende des Anhängers oder des Fahrzeugs mehr als 18 m beträgt.

9. Bremsanlage nach einem der vorhergehenden Ansprüche, wobei, in Abwesenheit einer elektrischen Verbindung mit dem Drucktegelmodul an der Antriebsmaschine, die elektronische Steuereinheit ein Steuersignal mit dem vom Druckwandler erhalteten Datum erzeugt.

## Revendications

1. Système de freinage pour une remorque, ladite remorque ayant une extrémité avant et arrière, le système de freinage comprenant un module de réglage de la pression (13) pouvant générer une force de freinage sur une extrémité de roue ou sur un essieu de la remorque,
une unité de commande électronique (49) conçue pour actionner le module de commande de la pression (13), ladite unité de commande électronique comprend un capteur de pression (48) conçu pour recevoir un signal de pression en provenance d'un moteur d'entraînement et conçu en outre pour convertir le signal de pression en un signal électronique, le signal électronique pouvant être traité par l'unité de commande électronique (49), de sorte que les signaux provenant du moteur d'entraînement puissent être transmis au module de réglage de pression (13), **caractérisé en ce que** les signaux électroniques provenant du module de réglage de pression (13) puissent être transmis à une autre remorque par l'intermédiaire de l'unité de commande électronique (49).

2. Système de freinage selon la revendication 1, dans lequel l'unité de commande électronique (49) est conçu pour transmettre le signal à une autre unité de commande électronique, ladite autre unité de commande électronique est conçue soit pour actionner un autre dispositif de freinage sur ladite remorque et/ou pour transmettre le signal à une autre unité de commande électronique ou au dispositif de freinage.

3. Système de freinage selon la revendication 1 ou la revendication 2, dans lequel le système comprend en outre un moyen conçu pour relayer un signal électronique audit dispositif de freinage ou chaque dispositif de freinage sur la remorque.

4. Système de freinage pour une remorque selon l'une quelconque des revendications 1 à 3, dans lequel la remorque comprend des premier et deuxième essieux disposés coaxialement l'un par rapport à l'autre et des troisième et quatrième essieux disposés coaxialement l'un par rapport à l'autre et derrière les premier et deuxième essieux par rapport à l'avant du véhicule, chaque essieu étant associé à une unité de commande respective conçue pour commander la force freinage appliquée sur ledit essieu.

5. Système de freinage selon l'une quelconque des revendications 1 à 4, dans lequel le capteur de pression (48) est situé dans la tête d'accouplement.

6. Système de freinage selon l'une quelconque des revendications 1 à 5, dans lequel la remorque comprend une première remorque ou une partie remorque, l'unité de commande électronique (49) étant conçue pour actionner le module de réglage de pression (13) sur ladite première remorque ou ladite partie remorque, l'unité de commande électronique étant conçue pour commander un autre dispositif de freinage sur une autre remorque ou une autre partie remorque.

7. Système de freinage selon l'une quelconque des revendications 1 à 6, dans lequel l'autre unité de commande électronique sélectionne un signal de commande provenant d'une unité électronique précédente plutôt qu'un signal provenant d'un dispositif de freinage.

8. Système de freinage selon l'une quelconque des revendications 1 à 7, dans lequel la distance entre l'extrémité avant et arrière de la remorque ou le véhicule est supérieure à 18 m.

9. Système de freinage selon l'une quelconque des revendications précédentes, dans lequel en l'absence d'une connexion électronique au module de réglage de pression sur le moteur d'entraînement, l'unité de commande électronique génère un signal de commande avec la date obtenue à partir du capteur de pression.
